(19) Europäisches Patentamt
European Patent Office
Office européen des brevets

(11) Numéro de publication: **0 172 114**
**A1**

(12) # DEMANDE DE BREVET EUROPEEN

(21) Numéro de dépôt: **85420110.0**

(22) Date de dépôt: **20.06.85**

(51) Int. Cl.⁴: **C 08 K 5/37**
C 08 L 57/08, C 08 J 3/24

(30) Priorité: **26.06.84 FR 8410420**

(43) Date de publication de la demande:
**19.02.86 Bulletin 86/8**

(84) Etats contractants désignés:
**AT BE CH DE FR GB IT LI LU NL SE**

(71) Demandeur: **CENTRE NATIONAL DE LA RECHERCHE SCIENTIFIQUE (C.N.R.S.)**
**15, Quai Anatole France**
**F-75700 Paris(FR)**

(72) Inventeur: **Michel, Alain**
**65 rue Henri Gorjus**
**F-69004 Lyon(FR)**

(72) Inventeur: **Gondard, Christian**
**4 Résidence Edgar Quinet**
**F-42300 Roanne(FR)**

(74) Mandataire: **Laurent, Michel et al,**
**20 rue Louis Chirpaz Boîte postale no. 32**
**F-69131 Ecully Cedex(FR)**

(54) **Procédé de réticulation d'un polymère halogéné au moyen d'un agent de couplage à base de thiolate.**

(57) Procédé de réticulation d'un polymère halogéné par substitution nucléophile des atomes d'halogènes au moyen d'un agent de couplage constitué par un thiolate organométallique, *caractérisé* en ce que ledit thiolate de couplage est un thiolate alcalin ou alcalino-terreux ne comportant pas de fonction amine, de formule générale :

$$Me - S - R_1 - \underset{\substack{\| \\ O}}{C} - O - R_2$$

dans laquelle :
- Me désigne un métal alcalin ou alcalino-terreux,
- $R_1$ désigne un radical aliphatique ou aromatique,
- $R_2$ désigne un groupement choisi dans le groupe constitué par :

$$* \; R_3 - O - \underset{\substack{\| \\ O}}{C} - R_1 - S - Me$$

$$* \; R_3 - \underset{\substack{| \\ R_4}}{C} = CH_2$$

$$* \; R_3 - C \equiv C - R_5$$

dans lesquelles $R_3$, $R_4$ et $R_5$ désignent un groupement alkyle ou aryle ne comportant pas de fonction amine, mais pouvant comporter des fonctions esters et/ou éthers.

EP 0 172 114 A1

# PROCEDE DE RETICULATION D'UN POLYMERE HALOGENE AU MOYEN D'UN AGENT DE COUPLAGE A BASE DE THIOLATE.

L'invention concerne un nouveau procédé de réticulation d'un polymère halogéné, notamment du polychlorure de vinyle (PVC) ou du polyéthylène chloré, au moyen d'un agent de couplage chimique plurifonctionnel à base de thiolate ; elle concerne également les résines ainsi réticulées.

Comme on le sait, la réticulation est une opération destinée à relier entre elles les chaînes d'un polymère au moyen de liaisons chimiques, afin de créer un réseau macromoléculaire. D'une façon générale, la réticulation d'un polymère a pour conséquence de modifier de façon importante ses propriétés mécaniques, de diminuer sa thermoplasticité et son fluage, notamment aux températures élevées, de diminuer également la déformation à la compression et enfin d'entraîner une amélioration de la résistance à l'abrasion et de la stabilité dimensionnelle.

Dans la suite du texte et dans les revendications, l'expression "polymère halogéné" désigne un polymère comportant des groupements $-(\underset{\displaystyle X}{\overset{|}{CH}})-$, X représentant un atome d'halogène,de préférence un atome de chlore. A titre d'exemple, on peut citer le PVC ou le polyéthylène chloré.

On connaît déjà plusieurs procédés de réticulation de ces polymères chlorés, notamment du PVC à l'état condensé,solide ou fondu.

Un de ces procédés connu sous le nom de NAKAMURA décrit par exemple dans "Journal of Molecular of Sciences, Chemistry" <u>A (12)</u> 2, 209 (1978), consiste à utiliser

comme agent de couplage un dérivé de la triazine, à savoir le dibutyl amino 2, dithiol 4-6 triazine) en présence de MgO. Cet agent de couplage comporte deux fonctions thiols de réactivité équivalente. On provoque ainsi la réticulation du polymère par des réactions chimiques interchaînes entraînant une modification importante de la viscosité de ce polymère, ce qui est peu compatible avec les conditions rhéologiques imposées par les procédés de mise en oeuvre, tels que l'extrusion, l'injection, mais surtout le calandrage. Bien que cet agent de couplage puisse être utilisé dans des procédés d'enduction, il provoque néanmoins une dégradation du polymère liée à la présence d'amines tertiaires.

Dans "Patents Abstracts of Japan", Vol.7, N° 277 (C-199)[1422] , du 9 Décembre 1983, on a proposé d'ajouter à ces dérivés de la triazine des carbonates d'alumine et de magnésie hydratés. Ce procédé entraîne toujours une dégradation du polymère lors des opérations de mise en oeuvre, notamment par dégagement d'acide chlorhydrique.

Dans le brevet américain US-A-4 234 705, on a suggéré d'utiliser comme agent de couplage un mélange de dérivés du 3,5- dimercapto 1,2,4- triazole comportant des groupements amines, tertiaires notamment, et d'un accepteur d'acide à base d'un composé métallique des groupes II ou IVa. Malheureusement, la présence des fonctions amines secondaires ou tertiaires entraîne les mêmes inconvénients que la triazine proposée par NAKAMURA. En effet, comme on le sait, ces amines sont des agents pro-dégradants, de sorte que la réticulation réalisée à partir d'agents de

couplage comportant de telles fonctions fait intervenir des doubles liaisons du polymère halogéné provenant de la dégradation et non pas de la substitution nucléophile des atomes de chlore.

L'invention pallie ces inconvénients. Elle vise un procédé de réticulation des polymères halogénés qui soit facile à mettre en oeuvre, notamment au cours d'une opération de mise en oeuvre, et dans lequel on contrôle parfaitement la réaction de réticulation. L'invention vise plus particulièrement un procédé qui soit adapté aux conditions rhéologiques imposées par les différents procédés de mise en oeuvre de ces polymères tels que par exemple l'injection, l'extrusion, le calandrage ou l'enduction.

Selon l'invention, la réticulation du polymère halogéné est essentiellement réalisée une fois la mise en forme effectuée, de sorte que la viscosité, et par voie de conséquence le comportement rhéologique du polymère halogéné fondu, ne soient pas modifiés.

Le procédé de réticulation de l'invention se base essentiellement sur la substitution nucléophile des atomes d'halogène, de chlore notamment, à l'aide d'un thiolate métallique particulier et non plus sur les doubles liaisons provoquées par la dégradation liée à la présence des fonctions amines, comme c'est d'ailleurs le cas avec les composés de l'art antérieur visé ci-dessus.

Ce procédé de réticulation d'un polymère halogéné par substitution nucléophile des atomes d'halogènes, au

moyen d'un agent de couplage constitué par un thiolate organo-métallique, <u>se caractérise</u> en ce que ledit thiolate de couplage est un thiolate alcalin ou alcalino-terreux ne comportant pas de fonction amine, de formule générale:

$$Me - S - R_1 - \underset{\underset{O}{\|}}{C} - O - R_2$$

dans laquelle :

. Me désigne un métal alcalin ou alcalino-terreux,

. $R_1$ désigne un radical aliphatique ou aromatique,

. $R_2$ désigne un groupement choisi dans le groupe constitué par :

* $R_3 - O - \underset{\underset{O}{\|}}{C} - R_1 - S - Me$

* $R_3 - \underset{\underset{R_4}{|}}{C} = CH_2$

* $R_3 - C \equiv C - R_5$

avec :

- $R_3$ désignant un groupement alkyle ou aryle ne comportant pas de fonction amine, mais pouvant comporter des fonctions esters et/ou ethers ;

- $R_4$ désigne un atome d'hydrogène ou un groupement alkyle ou aryle ne comportant pas de fonction amine ;

- $R_5$ désigne un atome d'hydrogène ou un groupement alkyle ou aryle ne comportant pas de fonction amine.

En d'autres termes, l'invention consiste à réticuler un polymère halogéné par substitution nucléophile des atomes d'halogène au moyen de thiolates métalliques spécifiques et non plus, comme précédemment, à réticuler au moyen des doubles liaisons provoquées par la dégradation liée aux fonctions amines présentes dans les thiolates particuliers mis en oeuvre. Ces différences dans les modes d'action, se traduisent par des résultats nouveaux

et différents, à savoir l'absence de dégradation et d'instabilité et la possibilité d'adapter la chimie de la réticulation aux impératifs rhéologiques des procédés classiques de mise en oeuvre.

Ainsi, lorsque les thiolates caractéristiques de l'invention sont incorporés dans une formule à base de polymère halogéné, de PVC notamment, ils provoquent le greffage et la réticulation de cette résine au cours des traitements thermomécaniques de mise en oeuvre et ce dans un domaine de températures pouvant varier de 80°C jusqu'à des températures aussi élevées que 220-230°C, du moins si le système stabilisant de la formule le permet.

Dans une première forme de réalisation, les thiolates caractéristiques de l'invention sont des dithiolates symétriques. Ainsi, la première fonction thiolate provoque alors un greffage par substitution nucléophile d'un atome de chlore, puis simultanément, la seconde fonction thiolate provoque la réticulation du polymère par la même réaction de substitution de l'atome de chlore. Ces dithiolates symétriques de formule générale :

$$Me - S - R_1 - \underset{\substack{\parallel \\ O}}{C} - O - R_3 - O - \underset{\substack{\parallel \\ O}}{C} - R_1 - S - Me,$$

sont obtenus par duplication à partir d'un thiol organique ne comportant pas de fonction amine, mais comportant au moins une fonction acide ou chlorure d'acide, à l'aide d'une réaction d'estérification faisant intervenir un diol et ces fonctions acide ou chlorure d'acide.

Si cette réaction de duplication peut être effectuée avant que le composé dupliqué ne soit mélangé au polymère à réticuler, dans une forme de réalisation avantageuse, la duplication est effectuée en présence même de ce polymère à réticuler. Il s'agit donc d'une duplication effectuée "in-situ" et avantageusement au cours d'une opération de mise en oeuvre, telle qu'une opération d'enduction, ce qui est nouveau et particulièrement économique.

En pratique, l'agent de couplage est le sel de sodium, de baryum ou de potassium du diester provenant d'un diol, pouvant comporter également des fonctions éthers comme le polyéthylène glycol, ayant réagi avec des acides para ou ortho mercaptobenzoïques ; la synthèse de ces dithiolates de sodium, de potassium ou de baryum symétriques, c'est-à-dire présentant une équivalence des réactivités chimiques des fonctions thiolates, peut être effectuée par estérification des acides ortho ou para mercaptobenzoïques ou de leurs chlorures d'acides, par des diols, puis par réaction du diester ainsi formé, soit avec l'hydrure de sodium pour la synthèse des dithiolates de sodium, soit avec la potasse pour la synthèse des dithiolates de potassium, soit avec l'oxyde de baryum pour la synthèse des dithiolates de baryum ;

avec l'éthylène glycol, on obtient ainsi des composés de formule, du moins lorsque le métal Me est monovalent (alcalin) :

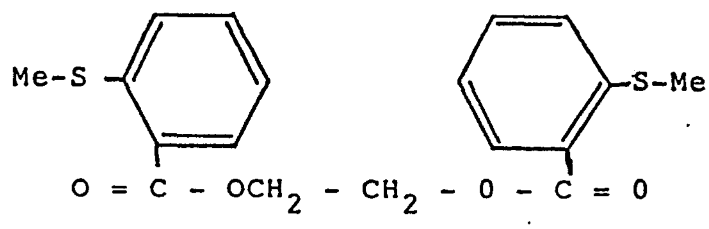

ou

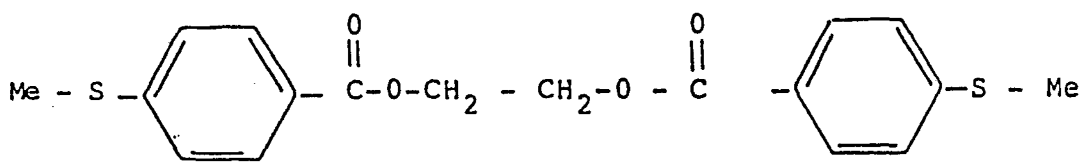

Il va de soi que si Me est un métal divalent (alcalino-terreux), cet atome de métal est lié à deux atomes de soufre et par voie de conséquence à au moins deux molécules.

Dans une seconde forme de réalisation, les thiolates caractéristiques de l'invention sont des monothiolates répondant à la formule générale donnée ci-dessus, obtenus à partir d'un thiol organique ne comportant pas de fonction amine, mais comportant une fonction acide ou chlorure d'acide par réaction d'estérification avec un alcool comportant au moins une fonction vinylique ou acétylénique. Ainsi, la fonction thiolate caractéristique provoque à la fois un greffage par substitution nucléophile des atomes d'halogène pendant la mise en forme du polymère, ce qui ainsi, ne modifie pas de manière substantielle la viscosité de ce polymère halogéné, puis, ultérieurement, et non plus simultanément, sa réticulation par activation thermique ou photochimique ou autre forme d'irradiation.

Avantageusement, en pratique :

- le monothiolate à fonction vinylique répond à la formule générale :

$$Me - S - R_1 - \underset{\underset{O}{\|}}{C} - O - R_3 - \underset{\underset{R_4}{|}}{C} = CH_2 \ ;$$

- la fonction vinylique est apportée par une estérification du monométhacrylate ou du monoacrylate d'éthylène glycol ;

- avantageusement, le composé utilisé est le

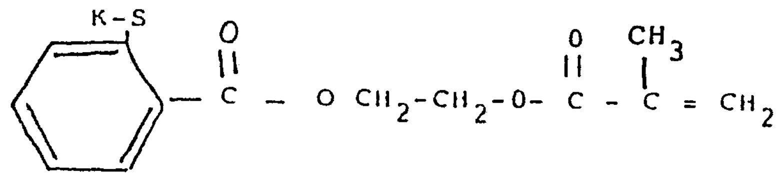

- le monothiolate à fonction acétylénique répond à la formule générale :

$$Me - S - R_1 - \underset{\underset{O}{\|}}{C} - O - R_3 - C \equiv C - R_5$$

- cette fonction acétylénique est apportée par estérification de l'alcool propargylique ;

- l'agent de couplage et le sel de sodium, de potassium, de baryum, de l'ester du monométhacrylate ou du monoacrylate d'éthylène glycol et des acides ortho ou para mercaptobenzoïques.

En pratique, dans l'une ou l'autre de ces deux formes de réalisation de l'invention :

- la concentration en agent de couplage dans le

polymère est généralement comprise entre 0,1 et 10 pcr ; si la concentration est inférieure à 1 pcr, la réticulation n'est que partielle ; mais cette réticulation partielle peut présenter un intérêt pour certaines applications ; si, en revanche, la concentration est supérieure à 10 pcr, on augmente inutilement le prix de revient, sans obtenir une amélioration proportionnelle des propriétés ;

- l'agent de couplage est préalablement dissout dans un solvant à haut point d'ébullition, tel que par exemple le tétraéthylène glycol ou encore mieux dans du polyéthylène glycol 200 ou 400, c'est-à-dire ayant un poids moléculaire proche de 200 ou de 400 ; cette dissolution active l'agent de couplage et facilite sa dispersion dans la résine ;

- comme déjà dit, l'opération de réticulation s'effectue en phase condensée, solide ou fondue, au cours des traitements thermomécaniques de mise en oeuvre du polymère halogéné.

La manière dont l'invention peut être réalisée et les avantages qui en découlent ressortiront mieux des exemples de réalisation qui suivent, donnés à titre indicatif et non limitatif.

Dans ces exemples, l'efficacité des agents réticulants a été étudiée en laboratoire à l'aide d'un plastographe Haake équipé d'un mélangeur interne de capacité 60g type Rheomix 600. Cet appareil permet de suivre en continu l'évolution du couple résistant exercé par le polymère sur les pales du malaxeur. La réticulation du polymère entraîne une augmentation de la viscosité à l'état fondu et par conséquent une augmentation du couple. La variation du couple $\Delta$ C après la gélification est donc un critère de réticulation.

Un autre critère choisi dans le cas du PVC est le taux d'insolubilisation dans le tétrahydrofuranne à la fin du traitement thermomécanique réalisé dans le plastographe Haake. La fraction insoluble est déterminée à partir d'un gramme environ d'échantillon mis dans le tétrahydrofuranne. Après douze heures de contact avec ce solvant, le polymère insoluble est éliminé par filtration. Le polymère passé en solution est alors précipité à l'aide de méthanol, puis filtré et séché à poids constant. Le taux de polymère insoluble est alors déterminé à partir de cette fraction en tenant compte des additifs présents initialement dans l'échantillon.

Des essais de réticulation du PVC sont résumés dans les tableaux I, II et III. Ils ont été réalisés en présence de phtalate d'éthyle-2-héxyle (DOP) comme plastifiant et en présence de stabilisants thermiques, tels que le stéarate de calcium, le stéarate de zinc, l'octoate de baryum et l'octoate de cadmium ou un thioglycolate d'étain. Les agents réticulants sont incoporés dans les mélanges précédents à l'état solide ou après mise en solution dans le tétraéthylène glycol ou le polyéthylène glycol 200 ou 400. Le mélange du polymère et de tous les additifs est réalisé par malaxage manuel à froid, puis introduit dans le malaxeur préalablement chauffé à une température comprise entre 140 et 170°C, la vitesse de rotation des pales étant de seize tours par minute. Une fois chargé, le malaxeur est fermé et la vitesse de rotation des pales est portée à cinquante tours par minute, alors que le couple et la température du matériau mesurée à l'aide d'un thermocouple effleurant dans la chambre de malaxage sont enregistrés en continu.

Les formules plastifiées de base utilisées pour les essais avec du PVC comportent :

- polychlorure de vinyle : 45,5 g soit 100 pcr ;
- agent plastifiant (DOP) : 13,6 g soit 30 pcr, ou 18,2 g soit 40 pcr.

Les tableaux joints I, II et III résument les conditions expérimentales des essais réalisés en mélangeur Haake et montrent l'efficacité des dithiolates vis-à-vis de la réticulation du polychlorure de vinyle apprécié d'une part par la variation du couple $\Delta$ C entre le couple minimum observé après la gélification du mélange, lorsque celle-ci ne se produit pas en même temps que la réticulation, et le couple maximum ($C_{max}$) atteint en fin d'expérience, et d'autre part par le taux d'insolubilisation du polymère dans le tétrahydrofurane en fin d'essais.

On a reporté dans les tableaux également le temps $T_{RI}$ au bout duquel apparait l'augmentation de couple, donc un début de réticulation significative et la température maximum $\theta_{max}$ atteinte par la matière en fin d'expérience.

Les résultats rassemblés dans les tableaux joints permettent de tirer les conclusions suivantes :

- les dithiolates de sodium, de potassium ou de baryum, tels que les diesters d'éthylène glycol des acides para ou ortho mercato benzoïques, présentent des réactivités équivalentes pour la reticulation du PVC (tableaux I et II) ;
- en l'absence de solvant, plus la concentration d'un agent de couplage est élevée, plus la réticulation intervient rapidement ;

- la dissolution préalable dans un solvant à haut point d'ébullition, tel que le tétraéthylène glycol ou de préférence les polyéthylènes glycols de masses moléculaires comprises entre 200 et 400, accélère la réticulation, même à des concentrations aussi faibles que 1 ou 2 pcr (voir essais 4 et 5 et 9 à 12) ;

- les composés para agissent plus rapidement que les composés ortho, et ils peuvent entraîner la réticulation du PVC en même temps que l'opération de gélification (essais 4 et 5) ;

- ces agents réticulants semblent bien adaptés aux procédés de mise en oeuvre par enduction dans lequel la gélification et la fusion se produisent une fois les objets élaborés.

T A B L E A U I

RETICULATION DU PVC PAR LES DITHIOLATES DE SODIUM DE L'ORTHO OU PARA DIBENZOATE D'ETHYLENE GLYCOL (DOP = 30 pcr)

| Exemples | Dithiolate pcr | Tétraéthylène glycol pcr | Stabilisant Ca pcr | Zn pcr | Température affichée °C | Durée min. | $T_{RI}$ min. | $C_{max}$ N.m | ΔC N.m | $\theta_{max}$ °C | % insoluble |
|---|---|---|---|---|---|---|---|---|---|---|---|
| 1 | 9,5 | 0 | 2 | 0 | 150 | 8 | 3 | 48,1 | 15,7 | 184 | 61 |
| 2 | 10 | 0 | 2 | 1 | 150 | 11 | 6 | 52,0 | 23,05 | 184 | 65 |
| 3 | 5 | 0 | 2 | 1 | 150 | 15 | 9 | 43,2 | 19,15 | 178 | 65 |
| 4 | 1 | 4,5 | 2 | 0 | 150 | 3,5 | 2 | 38,8 | 0,34 | 182 | 50,5 |
| 5* | 1 | 4,5 | 1 | 0 | 150 | 9 | - | 39,2 | - | 179 | 54 |
| 6* | 5 | 0 | - | - | 150 | 26 | 9 | 32,9 | 15,20 | 179 | 46 |

5* : essai effectué avec le dithiolate de para dibenzoate d'éthylène glycol

6* : ici, on a remplacé le système stabilisant Ca-Zn par un système stabilisant à base d'étain (trithioglycolate d'étain butyle).

T A B L E A U II

RETICULATION DU PVC PAR LES DITHIOLATES DE POTASSIUM DE L'ORTHO DIBENZOATE D'ETHYLENE GLYCOL ( DOP = 40 pcr )

| Exemples | Dithiolate pcr | Polyéthylène glycol 200 pcr | Stabilisant Ca pcr | Stabilisant Zn pcr | Température affichée °C | Durée min. | $T_{RI}$ min. | $C_{max}$ N.m | $\Delta C$ N.m | $\theta_{max}$ °C | % insoluble |
|---|---|---|---|---|---|---|---|---|---|---|---|
| 7 | 5 | 0 | 2 | 0 | 150 | 5 | 3,5 | 44,1 | 11,30 | 172 | 60 |
| 8 | 10 | 0 | 2 | 0 | 150 | 9 | 6 | 35,3 | 10,81 | 192 | 65 |
| 9 | 2 | 4,5 | 1 | 1 | 150 | 4,5 | 2 | 27,5 | 3,90 | 170 | 64 |
| 10 | 2 | 6,5 | 1 | 1 | 140 | 6 | 2 | 30,4 | 5,40 | 165 | 88,5 |
| 11 | 2 | 11 | 1 | 1 | 140 | 7 | 0,5 | 30,4 | 14,7 | 165 | 85 |
| 12 | 2 | 11 | 1 | 1 | 160 | 4 | 1 | 24,5 | 3,90 | 170 | 77 |

## T A B L E A U III

RETICULATION DU PVC PAR LES DITHIOLATES DE BARYUM DE L'ORTHO DIBENZOATE D'ETHYLENE GLYCOL (DOP = 40 pcr)

| Exemples | Dithiolate pcr | Polyéthylène Glycol 200 pcr | Stabilisant Ba pcr | Stabilisant Cd pcr | Température affichée °C | Duré min. | $T_{RI}$ min. | $C_{max}$ N.m | $\Delta C$ N.m | $\theta_{max}$ °C | % insoluble |
|---|---|---|---|---|---|---|---|---|---|---|---|
| 13 | 3 | 6,5 | 1 | 1 | 160 | 5 | 2 | 26,5 | 8,8 | 170 | 81 |
| 14 | 4 | 9 | 1,5 | 1,5 | 160 | 6,5 | 2,5 | 24,5 | 8,8 | 178 | 90 |
| 15 | 3 | 6,5 | 1 | 1 | 150 | 6 | 2,5 | 28,5 | 8,8 | 166 | 85 |

Exemple 16 :

Par estérification de l'acide ortho thiosalicylique à l'aide du méthacrylate d'hydroxyéthyle, on réalise l'agent difonctionnel de formule :

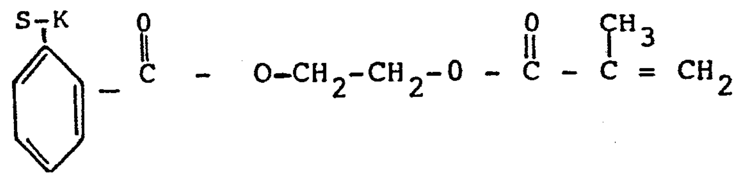

Ce composé se greffe sur le PVC au cours d'un traitement thermomécanique en mélangeur interne type Haake à 140°C sans entraîner la réticulation du polymère. En revanche, le PVC ainsi greffé et mis sous forme de film de 0,5 mm d'épaisseur à l'aide d'une presse Lescuyer Villeneuve ou d'un mélangeur à cylindre type Scamia, se réticule lorsqu'il est soumis aux UV à l'aide d'une lampe Wallas Knight de 80 Watts et dont la longueur d'onde maximum est de 360 mm.

La formulation de base utilisée pour cet exemple est:

| | |
|---|---|
| - polychlorure de vinyle | 45,5 g |
| - phtalate d'éthyle 2 héxyle | 18,2 g |
| - stéarate de zinc | 0,45 g |
| - stéarate de calcium | 0,45 g |
| - sel de potassium du métathacrylate d'éthylène glycol ortho mercapto benzoate | 2,27 g |
| - polyéthylène glycol de masse molaire moyenne 200 | 10 ml |

Après malaxage au mélangeur Haake pendant six minutes, 57 % de l'agent difonctionnel est greffé sur le polymère.

Après exposition au rayonnement ultra-violet durant quatre ou douze secondes, le taux d'insoluble est de 51 %.

Exemple 17 :

On utilise la formulation de base suivante :

| | |
|---|---|
| - PVC | 45,5 g |
| - phtalate d'éthyl 2 héxyle | 18 g |
| - octoate de baryum | 0,45 g |
| - octoate de cadmium | 0,45 g |
| - polyéthylène glycol de masse molaire moyenne 200 | 1 ml |
| - butyl carbitol | 3 ml |
| - sel de baryum du thiosalycilate d'éthyl 2 héxyle | 3 g |

Après malaxage au mélangeur Haake à 170°C pendant neuf minutes, le taux de polymère insoluble dans le tétrahydrofuranne est de 85 %. L'augmentation de couple $\Delta C$ après gélification est de 4,9 N.m et la $\theta_{max}$ atteinte par la matière en fin d'expérience est de 180°C.

Ainsi, les sels de baryum des composés dérivés des esters des acides ortho ou para mercaptobenzoïques permettent d'obtenir par trans-estérification in-situ un taux de réticulation équivalent à celui des essais 1 à 15.

Exemple 18 :

Dans les mêmes conditions que l'exemple 17, on mélange :

| | |
|---|---|
| - PVC | 100 pcr |
| - dioctyl phtalate (DOP) | 40 pcr |
| - stabilisant Ba/Cd liquide | 2 pcr |
| - stéarine | 0,5 pcr |
| - propylène glycol de masse moléculaire 425 | 6 pcr |
| - sel de baryum de l'acide thiosalycilique (agent de couplage) | 0,5 pcr |

Comme à l'exemple 17, l'agent de couplage est dupliqué in-situ par estérification, mais non pas par trans-estérification.

Après six minutes et demi de malaxage, le taux de polymère insoluble dans le tétrahydrofuranne est de 99 %, le TRI de deux minutes, l'augmentation de couple $\Delta C$ de 12,7 N.m et la $\theta_{max}$ de 194°C.

Exemple 19 :

Dans les mêmes conditions que l'exemple 17, on opère avec un mélange contenant :

| | |
|---|---|
| - polyéthylène chloré contenant 42 % de chlore en poids) | 100 pcr |
| - stabilisant Ba/Cd liquide | 2 pcr |
| - stéarine | 0,5 pcr |
| - polypropylène glycol de PM 425 | 10 pcr |
| - sel de baryum de l'acide thiosalycilique | 5 pcr. |

Après quatre minutes de malaxage, on obtient un polymère réticulé. Le TRI est de une minute et demi, le $\Delta C$ de 12,7 N.m et la $\theta_{max}$ de 190°C.

Le procédé de réticulation selon l'invention présente de nombreux avantages par rapport aux procédés connus à ce jour. On peut citer :

- l'adaptabilité de la chimie de la réticulation aux impératifs rhéologiques imposés par les différents procédés thermomécaniques de mise en oeuvre existants, tels que le calandrage, l'enduction, l'extrusion et l'injection, ce qui provient probablement du fait que l'on agit par substitution nucléophile des atomes de chlore et non pas par réaction radicalaire ;

- la compatibilité avec le polymère des agents de couplage tels que mis en oeuvre.

De la sorte, les polymères halogénés réticulés de cette façon, peuvent être utilisés avec succès dans les applications où l'on recherche une bonne stabilité dimensionnelle et une diminution notable de la thermoplasticité, notamment aux températures élevées.

## REVENDICATIONS

1/ Procédé de réticulation d'un polymère halogéné par substitution nucléophile des atomes d'halogènes au moyen d'un agent de couplage constitué par un thiolate organo-métallique, caractérisé en ce que ledit thiolate de couplage est un thiolate alcalin ou alcalino-terreux ne comportant pas de fonction amine, de formule générale:

$$Me - S - R_1 - \underset{\substack{\| \\ O}}{C} - O - R_2$$

dans laquelle :

- Me désigne un métal alcalin ou alcalino-terreux,
- $R_1$ désigne un radical aliphatique ou aromatique,
- $R_2$ désigne un groupement choisi dans le groupe constitué par :

  * $R_3 - O - \underset{\substack{\| \\ O}}{C} - R_1 - S - Me$

  * $R_3 - \underset{\substack{| \\ R_4}}{C} = CH_2$

  * $R_3 - C \equiv C - R_5$

  dans lesquelles :

  . $R_3$ désigne un groupement alkyle ou aryle ne comportant pas de fonction amine, mais pouvant comporter des fonctions esters et/ou éthers ;

  . $R_4$ désigne un atome d'hydrogène ou un groupement alkyle ou aryle ne comportant pas de fonction amine ;

  . $R_5$ désigne un atome d'hydrogène ou un groupement alkyle ou aryle ne comportant pas de fonction amine.

2/ Procédé selon la revendication 1, caractérisé en ce que le thiolate de couplage est un dithiolate symétrique de formule générale :

$$Me - S - R_1 - \underset{\substack{\| \\ O}}{C} - O - R_3 - O - \underset{\substack{\| \\ O}}{C} - R_1 - S - Me$$

3/ Procédé selon la revendication 2, caractérisé en ce que ce thiolate symétrique est obtenu par duplication à partir d'un thiol organique ne comportant pas de fonction amine, mais comportant au moins une fonction acide ou chlorure d'acide, à l'aide d'une réaction d'estérification faisant intervenir un diol et ces fonctions acide ou chlorure d'acide.

4/ Procédé selon l'une des revendications 2 et 3, caractérisé en ce que la fonction acide ou chlorure d'acide est l'acide ortho ou para mercapto-benzoïque.

5/ Procédé selon la revendication 3 ou 4, caractérisé en ce que la duplication est effectuée in situ dans le mélange même comprenant le polymère halogéné à réticuler et au cours d'une opération thermomécanique d'enduction de ce polymère.

6/ Procédé selon la revendication 1, caractérisé en ce que le thiolate de couplage est un monothiolate obtenu à partir d'un thiol organique ne comportant pas de fonction amine, mais comportant une fonction acide ou chlorure d'acide, par réaction d'estérification avec celles-ci et avec un alcool comportant au moins une fonction vinylique ou acétylénique.

7/ Procédé selon la revendication 6, caractérisé en ce que le monothiolate présentant une fonction vinylique répond à la formule générale :

$$Me - S - R_1 - \underset{\underset{O}{\|}}{C} - O - R_3 - \underset{\underset{R_4}{|}}{C} = CH_2$$

8/ Procédé selon la revendication 6, caractérisé en ce que le monothiolate à fonction acétylénique répond à la formule générale :

$$Me - S - R_1 - \underset{\underset{O}{\|}}{C} - O - R_3 - C \equiv C - R_5$$

9/ Procédé selon la revendication 6, caractérisé en ce que la fonction vinylique est apportée par estérification des acides ortho ou para mercaptobenzoïques à l'aide du monométhacrylate ou du monoacrylate d'éthylène glycol et en ce que la fonction acétylénique est apportée par estérification de ces mêmes acides ortho ou para mercaptobenzoïques à l'aide de l'alcool propargylique.

10/ Procédé selon l'une des revendications 1 à 9, caractérisé :

- d'une part, en ce que la concentration en agent de couplage est comprise entre 0,1 et 10 pcr ;
- d'autre part, en ce que l'agent de couplage est préalablement dissous dans un solvant à haut point d'ébullition ;
- et enfin, en ce que l'opération de réticulation est effectuée au cours d'une opération de mise en oeuvre thermomécanique du polymère halogéné à réticuler.

Office européen des brevets

**RAPPORT DE RECHERCHE EUROPEENNE**

0172114

Numéro de la demande

EP 85 42 0110

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 008 916 (J. SMITH)<br>* Revendication; colonne 2, lignes 49-55 *<br>--- | 1 | C 08 K 5/37<br>C 08 L 57/08<br>C 08 J 3/24 |
| A | US-A-3 041 304 (I. GARDNER et al.)<br>* Revendication 5 *<br>----- | 1 | |
| | | | DOMAINES TECHNIQUES RECHERCHES (Int. Cl.4) |
| | | | C 08 K<br>C 08 L<br>C 08 J |

Le présent rapport de recherche a été établi pour toutes les revendications

| Lieu de la recherche | Date d'achèvement de la recherche | Examinateur |
|---|---|---|
| LA HAYE | 07-10-1985 | HOFFMANN K.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant